# EUROPEAN PATENT APPLICATION

(11) **EP 3 065 365 A1**
(43) Date of publication of application: **07.09.2016**
(21) Application number: 14863366.2
(22) Date of filing: 24.11.2014
(51) Int. Cl.: H04L 29/06, H04N 5/232

(54) **VIDEO CAMERA CONTROL METHOD, USER EQUIPMENT AND VIDEO CAMERA**

(30) Priority: 22.11.2013 CN 201310601758
(71) Applicant: Huawei Technologies Co., Ltd., Longgang District Shenzhen, Guangdong 518129 (CN)
(72) Inventor: RAO, Shuiqing, Shenzhen Guangdong 518129 (CN); HUANG, Jing, Guangdong 518129 (CN)
(74) Representative: Thun, Clemens
(86) International application number: PCT/CN2014/091994
(87) International publication number: WO 2015/074613

(57) **Abstract**

Embodiments of the present invention provide a camera control method, user equipment, and a camera. The camera control method provided by the present invention includes: sending a detection request message to an IP multimedia subsystem IMS, where the detection request message includes a detection instruction, where the detection instruction is used to instruct, after the IMS forwards the detection request message to a camera, the camera to send a detection response message carrying device information to user equipment UE by using the IMS according to the detection instruction; receiving the detection response message returned by the IMS; and displaying corresponding parameter information and function keys according to the device information of the camera included in the detection response message. The embodiments of the present invention solve the problem in the prior art that UE can only monitor video content of a front-end camera by using an IMS and cannot intelligently recognize the front-end camera is solved, and implement intelligent display of the device information of the camera and flexible remote control.

## Description

### CROSS-REFERENCE TO RELATED APPLICATIONS

This application claims priority to Chinese Patent Application No. 201310601758.6, filed with the Chinese Patent Office on November 22, 2013 and entitled "CAMERA CONTROL METHOD, USER EQUIPMENT, AND CAMERA", which is incorporated herein by reference in its entirety.

### TECHNICAL FIELD

Embodiments of the present invention relate to communications technologies, and in particular, to a camera control method, user equipment, and a camera.

### BACKGROUND

In a 3rd Generation Partnership Project (3rd Generation Partnership Project, 3GPP for short) Long Term Evolution (Long Term Evolution, LTE for short) network, access and interconnection manners of an Internet Protocol (Internet Protocol, IP for short) multimedia subsystem (IP Multimedia Subsystem, IMS for short) are defined. An interconnection manner of the IMS is still based on an IP channel, which may implement interworking between an existing voice network and a data network, and may implement effective management of network resources, user resources, and application resources, and further enable a user to use multiple terminal devices to implement interworking in a cross-network manner.

Currently, a main application of the IMS, for example, is control of a front-end camera by using user equipment (User Equipment, UE for short). Specifically, the UE calls the front-end camera by dialing, and the front-end camera implements an automatic answer mechanism. After the call is established, the UE may monitor, in real time and by using an established video channel, content captured by the front-end camera.

However, in the video channel established between the UE and the front-end camera in the prior art, the UE can only monitor video content of the front-end camera by using the IMS and cannot intelligently recognize the front-end camera.

### SUMMARY

Embodiments of the present invention provide a camera control method, user equipment, and a camera to solve the problem in the prior art that UE can only monitor video content of a front-end camera by using an IMS and cannot intelligently recognize the front-end camera.

According to a first aspect, an embodiment of the present invention provides a camera control method, including:
sending a detection request message to an IP multimedia subsystem IMS, where the detection request message includes a detection instruction, where the detection instruction is used to instruct, after the IMS forwards the detection request message to a camera, the camera to send a detection response message carrying device information to the IMS according to the detection instruction, so that the IMS returns the detection response message to user equipment UE;
receiving the detection response message returned by the IMS; and
displaying corresponding parameter information and function keys according to the device information of the camera included in the detection response message, so that a user controls the camera according to the function keys.

In a first possible implementation manner of the first aspect, the method further includes:
receiving a control instruction that is generated when the user operates the function key; and
sending the control instruction to the IMS, so that the camera performs a corresponding operation after the camera receives the control instruction forwarded by the IMS.

According to the first aspect or the first possible implementation manner of the first aspect, in a second possible implementation manner, if an item list is preset in the UE, the item list is included in the detection instruction, so as to instruct the camera to send the detection response message carrying the device information to the IMS according to the item list; and
the displaying corresponding parameter information and function keys according to the device information of the camera included in the detection response message includes:
mapping the device information of the camera to the item list preset in the UE, and displaying the parameter information and function keys corresponding to the device information.

According to the second possible implementation manner of the first aspect, in a third possible implementation manner, if the device information of the camera includes an item that is absent from the item list, before the displaying corresponding parameter information and function keys according to the device information of the camera included in the detection response message, the method further includes:
updating, according to the device information of the camera, the item list preset in the UE, so that for the device information of the camera, the UE displays the corresponding parameter information and generates the corresponding function keys.

According to the first aspect, or any one of the first to the third possible implementation manners of the first aspect, in a fourth possible implementation manner, the method further includes:
updating, according to an update instruction sent by the user, the item list preset in the UE; or
when the device information is increased due to extension of functions of the camera, updating, by using an update instruction forwarded by the IMS to the UE, the item list preset in the UE.

According to the first aspect, or any one of the first to the fourth possible implementation manners of the first aspect, in a fifth possible implementation manner, the device information includes user information, use information, and function information of the camera; and the displaying corresponding parameter information and function keys according to the device information of the camera included in the detection response message includes:
acquiring the user information and use information of the camera from the detection response message, and displaying the parameter information of the camera on the UE; and
acquiring the supported function information of the camera from the detection response message, and generating the function keys corresponding to the function information on the UE.

According to the fifth possible implementation manner of the first aspect, in a sixth possible implementation manner, the method further includes:
sending an on/off control instruction to the IMS according to the user's on/off selection of the function key, so that the camera enables or disables a corresponding function after the camera receives the on/off control instruction forwarded by the IMS.

According to the fifth or sixth possible implementation manner of the first aspect, in a seventh possible implementation manner, the function information includes pan-tilt-zoom PTZ and automatic motion detection, and the function keys generated on the UE include keys of the PTZ and the automatic motion detection.

According to a second aspect, an embodiment of the present invention provides a camera control method, including:
receiving a detection request message that is sent by user equipment UE and forwarded by an IP multimedia subsystem IMS, where the detection request message includes a detection instruction; and
sending a detection response message carrying device information of a camera to the IMS according to the detection instruction, so that the IMS feeds back the detection response message to the UE, where the detection response message is used to enable the UE to display corresponding parameter information and function keys according to the device information.

In a first possible implementation manner of the second aspect, the method further includes:
receiving a control instruction that is sent by the UE and forwarded by the IMS; and
performing a corresponding operation according to an operation on the function key as indicated by the control instruction.

According to the second aspect or the first possible implementation manner of the second aspect, in a second possible implementation manner, if an item list is preset in the UE, the item list is included in the detection instruction; and the sending a detection response message carrying device information of a camera to the IMS according to the detection instruction includes:
sending the detection response message carrying the device information of the camera to the IMS according to the item list.

According to the second possible implementation manner of the second aspect, in a third possible implementation manner, if the device information of the camera includes an item that is absent from the item list, the detection response message is further used to enable the UE to update, according to the device information, the item list preset in the UE.

According to the second aspect, or any one of the first to the third possible implementation manners of the second aspect, in a fourth possible implementation manner, the method further includes:
when the device information is increased due to extension of functions of the camera, forwarding an update instruction to the UE by using the IMS, so that the UE updates the preset item list according to the update instruction.

According to the second aspect, or any one of the first to the fourth possible implementation manners of the second aspect, in a fifth possible implementation manner, the device information includes user information, use information, and function information of the camera; and the method further includes:
receiving an on/off selection instruction that is sent by the UE and forwarded by the IMS; and
enabling or disabling a corresponding function according to the on/off selection instruction.

According to a third aspect, an embodiment of the present invention provides user equipment, including:
a sending module, configured to send a detection request message to an IP multimedia subsystem IMS, where the detection request message includes a detection instruction, where the detection instruction is used to instruct, after the IMS forwards the detection request message to a camera, the camera to send a detection response message carrying device information to the IMS according to the detection instruction, so that the IMS returns the detection response message to the user equipment UE;
a receiving module, configured to receive the detection response message returned by the IMS; and
a processing module, configured to display corresponding parameter information and function keys according to the device information of the camera included in the detection response message received by the receiving module, so that a user controls the camera according to the function keys.

In a first possible implementation manner of the third aspect, the equipment further includes:
the receiving module is further configured to receive a control instruction that is generated when the user operates the function key; and
the sending module is further configured to send the control instruction to the IMS, so that the camera performs a corresponding operation after the camera receives the control instruction forwarded by the IMS.

According to the third aspect or the first possible implementation manner of the third aspect, in a second possible implementation manner, if an item list is preset in the UE, the item list is included in the detection instruction, so as to instruct the camera to send the detection response message carrying the device information to the IMS according to the item list; and
the processing module is specifically configured to map the device information of the camera to the item list preset in the UE, and display the parameter information and function keys corresponding to the device information.

According to the second possible implementation manner of the third aspect, in a third possible implementation manner, the equipment further includes:
an updating module, configured to: if the device information of the camera includes an item that is absent from the item list, before the processing module displays the corresponding parameter information and function keys according to the device information of the camera included in the detection response message received by the receiving module, update, according to the device information of the camera, the item list preset in the UE, so that for the device information of the camera, the UE displays the corresponding parameter information and generates the corresponding function keys, where
the updating module is further configured to update, according to an update instruction sent by the user, the item list preset in the UE, or when the device information is increased due to extension of functions of the camera, update, by using an update instruction forwarded by the IMS to the UE, the item list preset in the UE.

According to the third aspect, or any one of the first to the third possible implementation manners of the third aspect, in a fourth possible implementation manner, the device information includes user information, use information, and function information of the camera; and the processing module is specifically configured to: acquire the user information and use information of the camera from the detection response message, and display the parameter information of the camera on the UE; and acquire the supported function information of the camera from the detection response message, and generate the function keys corresponding to the function information on the UE.

According to the fourth possible implementation manner of the third aspect, in a fifth possible implementation manner, the receiving module is further configured to receive the user's on/off selection operation on the function key; and
the sending module is further configured to send an on/off control instruction to the IMS according to the user's on/off selection operation on the function key, so that the camera enables or disables a corresponding function after the camera receives the on/off control instruction forwarded by the IMS.

According to a fourth aspect, an embodiment of the present invention provides a camera, including:
a receiving module, configured to receive a detection request message that is sent by user equipment UE and forwarded by an IP multimedia subsystem IMS, where the detection request message includes a detection instruction; and
a sending module, configured to send a detection response message carrying device information of the camera to the IMS according to the detection instruction received by the receiving module, so that the IMS feeds back the detection response message to the UE, where the detection response message is used to enable the UE to display corresponding parameter information and function keys according to the device information.

In a first possible implementation manner of the fourth aspect, the receiving module is further configured to receive a control instruction that is sent by the UE and forwarded by the IMS; and
a processing module is configured to perform a corresponding operation according to an operation on the function key as indicated by the control instruction received by the receiving module.

According to the fourth aspect or the first possible implementation manner of the fourth aspect, in a second possible implementation manner, if an item list is preset in the UE, the item list is included in the detection instruction; and the sending module is specifically configured to send the detection response message carrying the device information of the camera to the IMS according to the item list.

According to the fourth aspect or either one of the first and second possible implementation manners of the fourth aspect, in a third possible implementation manner, the sending module is further configured to: when the device information is increased due to extension of functions of the camera, forward an update instruction to the UE by using the IMS, so that the UE updates the preset item list according to the update instruction.

According to the fourth aspect, or any one of the first to the third possible implementation manners of the fourth aspect, in a fourth possible implementation manner, the device information includes user information, use information, and function information of the camera; the receiving module is further configured to receive an on/off selection instruction that is sent by the UE and forwarded by the IMS; and
the processing module is further configured to enable or disable a corresponding function according to the on/off selection instruction received by the receiving module.

By using the camera control method, user equipment, and camera in the embodiments of the present invention, a detection request message is sent by using an IMS, to a camera that has established a connection with UE, so as to instruct the camera to return a detection response message carrying device information of the camera to the UE. In this way, parameter information and function keys corresponding to the device information of the camera are displayed on the UE; the problem in the prior art that UE can only monitor video content of a front-end camera by using an IMS and cannot intelligently recognize the front-end camera is solved; the device information of the camera is displayed intelligently.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a flowchart of a camera control method according to Embodiment 1 of the present invention;
FIG. 2 is a flowchart of another camera control method according to an embodiment of the present invention;
FIG. 3 is a schematic diagram of a display interface of UE provided in the method shown in FIG. 2;
FIG. 4 is a flowchart of a camera control method according to Embodiment 2 of the present invention;
FIG. 5 is a flowchart of still another camera control method according to an embodiment of the present invention;
FIG. 6 is a flowchart of a camera control method according to Embodiment 3 of the present invention;
FIG. 7 is a flowchart of a camera control method according to Embodiment 4 of the present invention;
FIG. 8 is a signaling flowchart of a camera control method according to Embodiment 5 of the present invention;
FIG. 9 is a schematic structural diagram of UE according to Embodiment 6 of the present invention;
FIG. 10 is a schematic structural diagram of another UE according to an embodiment of the present invention;
FIG. 11 is a schematic structural diagram of a camera according to Embodiment 7 of the present invention;
FIG. 12 is a schematic structural diagram of UE according to Embodiment 8 of the present invention; and
FIG. 13 is a schematic structural diagram of a camera according to Embodiment 9 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

### Embodiment 1

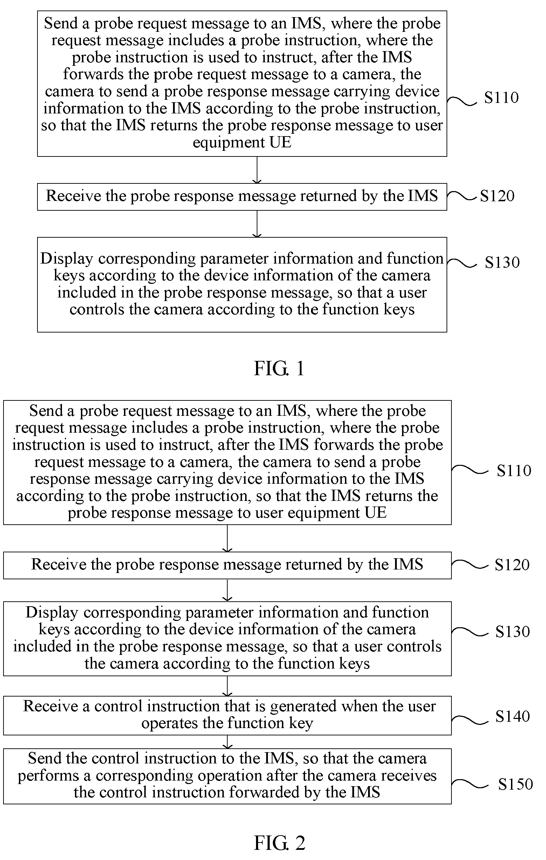

FIG. 1 is a flowchart of a camera control method according to Embodiment 1 of the present invention. The method provided by this embodiment is applicable to a case in which UE performs video monitoring on a connected camera by using an IMS. The method may be executed by the UE, and the UE is generally implemented by using a method of hardware and software. As shown in FIG. 1, the method in this embodiment may include:
S110. Send a detection request message to an IMS, where the detection request message includes a detection instruction, where the detection instruction is used to instruct, after the IMS forwards the detection request message to a camera, the camera to send a detection response message carrying device information to the IMS according to the detection instruction, so that the IMS returns the detection response message to user equipment UE.

Generally, main entities in the IMS include a call session control function (Call Session Control Function, CSCF for short) and a home subscriber server (Home Subscriber Server, HSS for short). When a user accesses the IMS, the HSS is queried by using an interrogating-call session control function (Interrogating CSCF, I-CSCF for short) to determine a serving-call session control function (Serving CSCF, S-CSCF for short) that serves the user, so as to record a call status of the user and implement a call control function. The HSS also records user information and service data of each IMS user, and cooperates with the CSCF to implement a routing function. That is, UE and a front-end camera connected by using the IMS may perform data transmission through an IP channel. In this embodiment, the UE has established an IMS connection with the front-end camera, and therefore may perform video communication with the front-end camera by using the IMS. Different from the prior art in which only video content of a front-end camera can be displayed on UE in real time, the method provided by this embodiment allows the UE to send a detection request message to the IMS, where the detection request message is the Session Initiation Protocol (Session Initiation Protocol, SIP for short) used in the IMS, and a detection instruction included in the detection request message is used to enable, after the IMS forwards the detection request message to the front-end camera, the front-end camera to return a detection response message carrying device information to the UE by using the IMS according to the detection instruction. Specifically, the device information may be, for example, a name, temperature information, a pan-tilt-zoom (Pan-Tilt-Zoom, PTZ for short) capability, an automatic motion detection capability, an infrared video capability, a smoke detection capability, and the like of the front-end camera.

It should be noted that the detection request message sent by the UE to the IMS and the detection response message returned by the front-end camera to the IMS are generally INFO, OPTIONS, MESSAGE, and NOTIFY messages in the SIP protocol. These messages are standard types of messages in the SIP protocol. For example, in this embodiment, the detection request message sent by the UE to the IMS may be an OPTIONS message, and the detection instruction may specifically be included in Extensible Markup Language (Extensible Markup Language, xml for short) information in the OPTIONS message, for requesting to indicate the device information of the camera. For example, xml information in the sent OPTIONS message may be:

```
           <?xml version=" 1.0"?>
           <IPCameraRequest></IPCameraRequest>
```

S120. Receive the detection response message returned by the IMS.

After the front-end camera sends the detection response message carrying the device information of the front-end camera to the IMS, the IMS further returns the detection response message to the UE, and the UE receives the detection response message forwarded by the IMS.

S130. Display corresponding parameter information and function keys according to the device information of the camera included in the detection response message, so that a user controls the camera according to the function keys.

In this embodiment, after receiving the detection response message forwarded by the IMS, the UE may display the parameter information and function keys of the front-end camera on the UE according to the device information carried in the detection response message. The parameter information may be the name and temperature information of the front-end camera. The function keys may be corresponding keys generated according to capabilities of the camera, and generally may be keys of the PTZ function, automatic motion detection function, infrared video function, or smoke detection function, and then, the user may learn the parameter information of the front-end camera and understand specific functions of the front-end camera.

By using the camera control method provided by this embodiment, a detection request message is sent by using an IMS, to a camera that has established a connection with UE, to instruct the camera to return a detection response message carrying device information of the camera to the UE. In this way, parameter information and function keys corresponding to the device information of the camera are displayed on the UE; the problem in the prior art that UE can only monitor video content of a front-end camera by using an IMS and cannot intelligently recognize the front-end camera is solved; the device information of the camera is displayed intelligently.

Further, FIG. 2 is a flowchart of another camera control method according to the embodiment of the present invention. On a basis of FIG. 1, the camera control method provided by this embodiment further includes:
S140. Receive a control instruction that is generated when the user operates the function key.

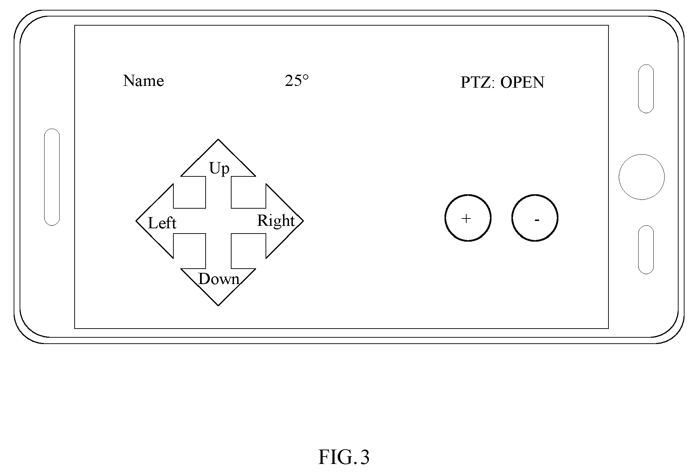

In this embodiment, after the UE displays the corresponding parameter information and function keys according to the device information of the camera, where the function keys are used to instruct the user to operate the front-end camera, the user operates a function key according to a requirement. The function keys generated on a display screen of the UE are generally touch operations. For example, operations on the PTZ function specifically include full-sphere pan and tilt, namely, up and down, and left and right movements, and lens zooming, namely, zoom-in and zoom-out, and zoom control. As shown in FIG. 3, which is a schematic diagram of a display interface of the UE provided in the method shown in FIG. 2, after determining to operate the PTZ function, corresponding fixed buttons may be generated on the display screen, for example, a button for controlling an upward, downward, leftward, or rightward direction and a button for controlling a zoom-in or zoom-out line-of-sight range. In specific implementation, it may also be that the buttons for operating the function keys are not generated, and a control operation on the PTZ is implemented by using a touch signal preset in the UE. For example, a slide gesture of the user on the display screen controls the front-end camera to move upward, downward, leftward, or rightward. In specific implementation, the control instruction sent by the UE may be sent by using an INFO message in the SIP protocol. Specifically, the instruction is packed in xml information of the INFO message. The following is specific content of the xml information in which the control instruction is packed:

```
           Content-Type: application/IPCamera+xml
           <?xml version=" 1.0"?>
           <IpCamera>
           <Pan>Right</Pan>
           <Tilt>Up</Tilt>
           <Zoom>In</Zoom>
           <Motiondetection>On</Motiondetection>
           </IpCamera>
```

In the foregoing xml information, Pan=Right represents a rightward movement, and Pan=Left represents a leftward movement; Tilt=Up represents an upward movement, and Tilt=Down represents a downward movement; Zoom=In represents zooming in by one time, and Zoom=Out represents zooming out by one time; when Motiondetection is set to On, a motion detection capability is enabled, and when Motiondetection is set to Off, the motion detection capability is disabled.

S150. Send the control instruction to the IMS, so that the camera performs a corresponding operation after the camera receives the control instruction forwarded by the IMS.

In this embodiment, the corresponding control instruction is generated according to the user's operation on the function key, and the UE sends the control instruction to the camera by using the IMS, so that the camera performs the corresponding operation according to the instruction, thereby implementing a function of the UE remotely controlling the camera that is connected over a network. In specific implementation, the user's control operation on the camera on a UE side is specifically an operation on a function key generated according to device information of the camera. Therefore, operations that the user may select on the UE are adaptive to functions of the camera, a flexible remote control function is implemented, and remote control operations performed on the camera become more intelligent.

It should be noted that the control instruction sent by the UE in this embodiment is also sent in a form of a request message, and correspondingly, the camera may return a corresponding response message according to the request message; the xml information in the embodiment is an information set, that is, the instruction included in the sent request message may be only one instruction, or may be multiple instructions, and there is no sequence requirement for the multiple instructions.

### Embodiment 2

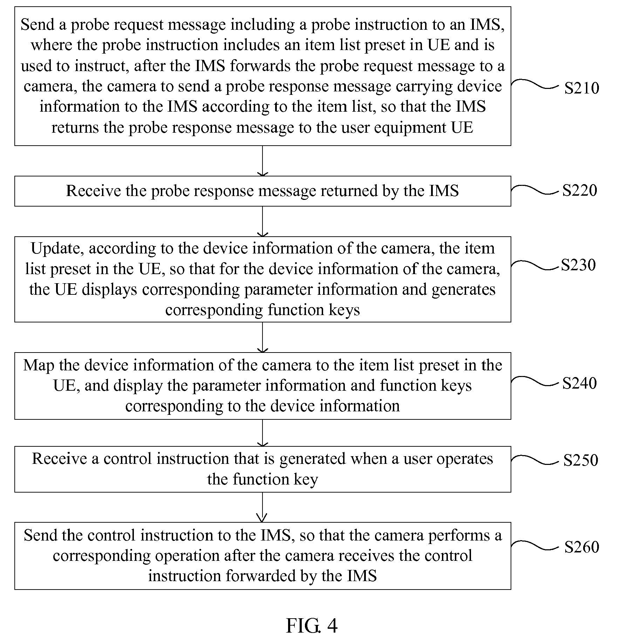

FIG. 4 is a flowchart of a camera control method according to Embodiment 2 of the present invention. As shown in FIG. 4, the method in this embodiment may include:
S210. Send a detection request message including a detection instruction to an IMS, where the detection instruction includes an item list preset in UE and is used to instruct, after the IMS forwards the detection request message to a camera, the camera to send a detection response message carrying device information to the IMS according to the item list, so that the IMS returns the detection response message to the user equipment UE.

In this embodiment, an item list for device information of a front-end camera may be preset in the UE. Therefore, the detection instruction sent by the UE includes the item list to instruct the camera to send a detection response message carrying the device information to the IMS according to the item list. Specifically, the front-end camera maps items in the device information of the camera to the item list, fills in corresponding items in the item list with parameter information and capability information of the camera, packs the filled information in the corresponding detection response message, and returns the detection response message to the UE. For example, the filled information may be packed in a 200 OK message and returned to the UE.

S220. Receive the detection response message returned by the IMS.

Specifically, for specific implementation of step S220, reference may be made to step S120 in Embodiment 1.

S230. Update, according to the device information of the camera, the item list preset in the UE, so that for the device information of the camera, the UE displays corresponding parameter information and generates corresponding function keys.

In this embodiment, when the device information of the camera includes an item that is absent from the item list, the item list preset in the UE needs to be updated, so that an updated item list includes all the items in the device information of the camera. Generally, the item list preset in the UE includes a total set of the device information. However, if the device information of the camera does not exist in an item set in the UE, the UE may first update the item list preset in the UE, so that complete display is implemented according to the device information.

S240. Map the device information of the camera to the item list preset in the UE, and display the parameter information and function keys corresponding to the device information.

In this embodiment, the UE has a preset item list. Therefore, after the UE receives the returned detection response message, the UE specifically maps the device information carried in the message, to the item list preset in the UE for display.

S250. Receive a control instruction that is generated when a user operates the function key.

S260. Send the control instruction to the IMS, so that the camera performs a corresponding operation after the camera receives the control instruction forwarded by the IMS.

Specifically, for specific implementation of steps S250 and S260, reference may be made to steps S140 and S150 in Embodiment 1.

By using the camera control method provided by this embodiment, a detection request message is sent by using an IMS, to a camera that has established a connection with UE, so as to instruct the camera to return a detection response message carrying device information of the camera to the UE. In this way, parameter information and function keys corresponding to the device information of the camera are displayed on the UE; the problem in the prior art that UE can only monitor video content of a front-end camera by using an IMS and cannot intelligently recognize the front-end camera is solved; the device information of the camera is displayed intelligently; control operations performed on the camera become more intelligent. In addition, an item list is preset in the UE, so that the device information carried in the detection response message returned by the camera corresponds to the list, and the UE displays the function keys and the parameter information according to content of the item list. This provides a specific manner of intelligent display on a UE side.

Optionally, in the camera control method provided by this embodiment, when the device information is increased due to extension of functions of the camera, an update instruction may be forwarded to the UE by using the IMS to synchronously update the item list preset in the UE, so that the item set in the list is greater than or equal to items in the device information of the camera. It should be noted that the update performed by the UE on the item list in this embodiment may also be an update of the item list preset in the UE according to an update instruction sent by the user.

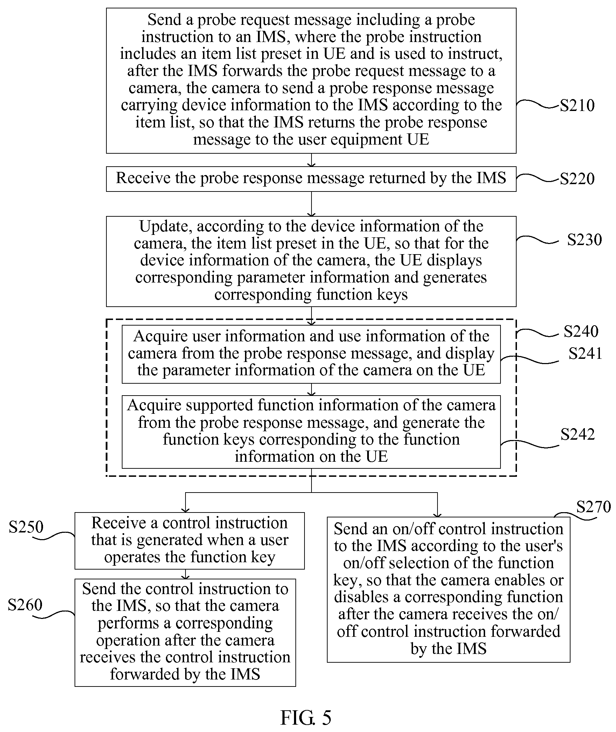

Further, FIG. 5 is a flowchart of still another camera control method according to the embodiment of the present invention. On a basis of FIG. 4, in the camera control method provided by this embodiment, the device information of the camera may include user information, use information, and function of the camera. Correspondingly, step S240 specifically includes:
S241. Acquire user information and use information of the camera from the detection response message, and display the parameter information of the camera on the UE.
S242. Acquire supported function information of the camera from the detection response message, and generate the function keys corresponding to the function information on the UE.

In this embodiment, the user information of the camera is generally a device name or an account name for accessing a network. The use information may be a temperature, a storage volume, and the like for normal use of the camera. The function information may be capabilities of the camera, for example, the PTZ function, automatic motion detection function, infrared video function, or smoke detection function in the foregoing embodiment.

Still further, the method provided by this embodiment further includes: S270. Send an on/off control instruction to the IMS according to the user's on/off selection of the function key, so that the camera enables or disables a corresponding function after the camera receives the on/off control instruction forwarded by the IMS. It should be noted that, in this embodiment, there is no specific sequence between steps S270 and S250.

In specific implementation, the function information of the camera may include PTZ, automatic motion detection, and the like, and the function keys generated on the UE include keys for implementing the PTZ and the automatic motion detection. In this embodiment, the corresponding keys generated according to the function information may not only control operations on the front-end camera, but also implement, on the UE side, on/off control on corresponding device functions, so that the user chooses to disable functions that do not need to be used in the camera to reduce power consumption of the camera.

### Embodiment 3

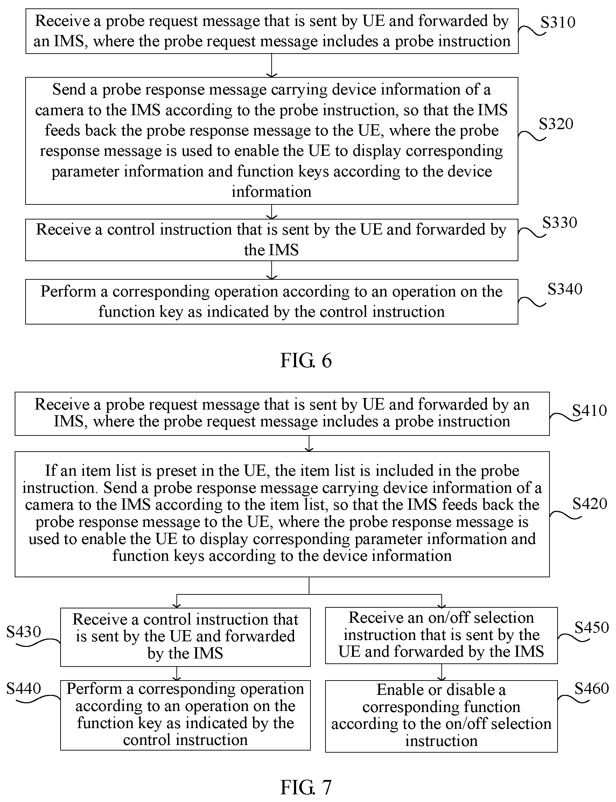

FIG. 6 is a flowchart of a camera control method according to Embodiment 3 of the present invention. The method provided by this embodiment is applicable to a case in which UE performs video monitoring on a connected camera by using an IMS. The method may be executed by the camera, and the camera is generally implemented by using a method of hardware and software. As shown in FIG. 6, the method in this embodiment may include:
S310. Receive a detection request message that is sent by UE and forwarded by an IMS, where the detection request message includes a detection instruction.

In this embodiment, data transmission between the camera and the UE with which an IMS connection is established is generally implemented by sending SIP messages via the IMS. Therefore, the detection request message sent by the UE to the camera is first sent to the IMS, and then forwarded by the IMS to the camera; in addition, the detection request message includes a detection instruction of the UE for the camera.

S320. Send a detection response message carrying device information of a camera to the IMS according to the detection instruction, so that the IMS feeds back the detection response message to the UE, where the detection response message is used to enable the UE to display corresponding parameter information and function keys according to the device information.

The camera takes a corresponding action according to the received detection instruction, and after packing the device information of the camera, sends the detection response message corresponding to the request to the UE by using the IMS, where the detection response message carries the packed device information, so that the UE may display the parameter information and function keys of the camera according to the device information. The parameter information may be a name and temperature information of the camera. The function keys may be corresponding keys generated according to capability information of the camera, and generally may be keys of a PTZ function, an automatic motion detection function, an infrared video function, or a smoke detection function. Further, a user may learn the parameter information of the front-end camera and understand specific functions of the front-end camera.

It should be noted that the detection request message sent by the UE and forwarded by the IMS to the camera and the detection response message returned by the camera to the UE by using the IMS are generally INFO, OPTIONS, MESSAGE, and NOTIFY messages in the SIP protocol. These messages are standard types of messages in the SIP protocol. For example, in this embodiment, the detection response message sent by the camera to the IMS may be a specific 200 OK message in the standard messages, and the device information may be included in xml information in the 200 OK message, so that after receiving the detection response message, the UE may definitely know parameter performance and capabilities of the camera. For example, the xml information in the sent 200 OK message may be:

```
           Content-Type: application/IPCamera+xml
           <?xml version=" 1.0"?>
           <IPCameraRespone>
           <Name>Bedroom</Name>
           <Pan>Support</Pan>
           <Tilt>Support</Tilt>
           <Zoom>Support</Zoom>
           <Motiondetection>Support</Motiondetection>
           <IRNV>Support<IRNV>
           <Smoketesting>Support</Smoketesting>
           <Temperature>25<Temperature>
           </IPCameraRespone>
```

In the foregoing xml information, indication of the device information of the camera includes the name (Name) of the camera and the detected temperature information (Temperature), and it may be learned that the camera supports the PTZ (Pan-Tilt-Zoom) function, automatic motion detection (Motiondetection) function, infrared video (IRNV) function, or smoke detection (Smoketesting) function.

By using the camera control method provided by this embodiment, between UE and a camera with which a connection is established, the camera receives a detection request message forwarded by an IMS, and returns a detection response message carrying device information of the camera to the UE, so that parameter information and function keys corresponding to the device information of the camera may be displayed on the UE. In this way, the problem in the prior art that UE can only monitor video content of a front-end camera by using an IMS and cannot intelligently recognize the front-end camera is solved; the device information of the camera is displayed intelligently.

Further, the camera control method provided by this embodiment further includes:
S330. Receive a control instruction that is sent by the UE and forwarded by the IMS.

In this embodiment, when the user operates a function key generated in the UE, a corresponding control instruction may be sent to the camera. Similarly, the IMS receives the control instruction sent by the UE, and forwards it to the camera.

S340. Perform a corresponding operation according to an operation on a function key as indicated by the control instruction.

In this embodiment, after the camera receives the control instruction forwarded by the IMS, the corresponding operation may be performed as indicated by the instruction, so as to implement a function of the UE remotely controlling the camera that is connected over a network. In specific implementation, the user's control operation on the camera on a UE side is specifically an operation on a function key generated according to the device information of the camera. Therefore, operations that the user may select on the UE are adaptive to functions of the camera, and control operations performed on the camera become more intelligent.

It should be noted that the control instruction received by the camera in this embodiment is also sent in a form of a request message, and correspondingly, the camera may return a corresponding response message according to the request message.

### Embodiment 4

FIG. 7 is a flowchart of a camera control method according to Embodiment 4 of the present invention. As shown in FIG. 7, the method in this embodiment may include:
S410. Receive a detection request message that is sent by UE and forwarded by an IMS, where the detection request message includes a detection instruction.

Specifically, for specific implementation of step S410, reference may be made to step S310 in Embodiment 3.

S420. If an item list is preset in the UE, the item list is included in the detection instruction. Send a detection response message carrying device information of a camera to the IMS according to the item list, so that the IMS feeds back the detection response message to the UE, where the detection response message is used to enable the UE to display corresponding parameter information and function keys according to the device information.

In this embodiment, an item list for device information of a front-end camera may be preset in the UE. Therefore, the detection instruction received by the camera includes the item list, which instructs the camera to send a detection response message carrying the device information to the IMS according to the item list. Specifically, the front-end camera maps items in the device information of the front-end camera to the item list, fills in corresponding items in the item list with parameter information and capability information of the front-end camera, packs the filled information in the corresponding detection response message, and returns the detection response message to the UE. For example, the filled information may be packed in a 200 OK message and returned to the UE. For content of the device information of the camera that is packed by the camera, reference may be made to specific content of the xml information in Embodiment 3. Correspondingly, according to content related to the device information in the 200 OK message, namely, the specific content of the xml information, the UE may display the corresponding parameter information, and generate the corresponding function keys.

It should be noted that, when the device information of the camera includes an item that is absent from the item list, the detection response message is further used to enable the UE to update, according to the device information, the item list preset in the UE.

S430. Receive a control instruction that is sent by the UE and forwarded by the IMS.

S440. Perform a corresponding operation according to an operation on the function key as indicated by the control instruction.

Specifically, for specific implementation of steps S430 and S440, reference may be made to steps S330 and S340 in Embodiment 3.

By using the camera control method provided by this embodiment, between UE and a camera with which a connection is established, the camera receives a detection request message forwarded by an IMS, and returns a detection response message carrying device information of the camera to the UE, so that parameter information and function keys corresponding to the device information of the camera may be displayed on the UE. In this way, the problem in the prior art that UE can only monitor video content of a front-end camera by using an IMS and cannot intelligently recognize the front-end camera is solved; the device information of the camera is displayed intelligently; control operations performed on the camera become more intelligent. In addition, the device information that is packed by the camera according to the item list preset in the UE corresponds to the list, so that the function keys of the parameter information may be displayed according to content of the item list. This provides a specific manner of intelligent display on a UE side.

Optionally, in the camera control method provided by this embodiment, when the device information is increased due to extension of functions of the camera, an update instruction is forwarded to the UE by using the IMS, so that the UE updates the preset item list according to the update instruction.

Further, in this embodiment, the device information of the camera may include user information, use information, and function information of the camera, and the method provided by this embodiment further includes:
S450. Receive an on/off selection instruction that is sent by the UE and forwarded by the IMS.
S460. Enable or disable a corresponding function according to the on/off selection instruction.

In this embodiment, the on/off selection instruction sent by the UE is forwarded by the IMS, and specifically, is used to choose to enable or disable a function of the front-end camera. In this embodiment, the corresponding keys generated according to the function information may not only control operations on the front-end camera, but also enable the camera to disable a corresponding function to reduce power consumption when a user initiates an operation of turning off a function key.

It should be noted that, in this embodiment, there is no specific sequence between steps S450 and S430.

### Embodiment 5

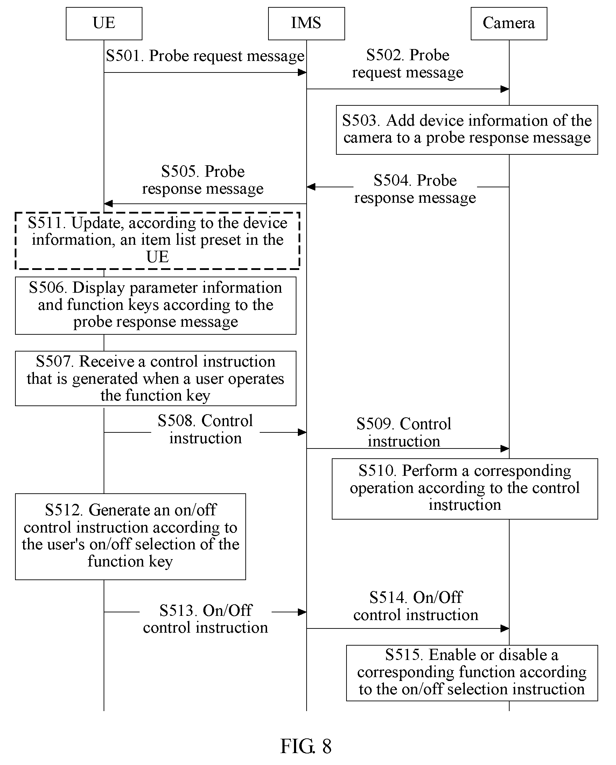

FIG. 8 is a signaling flowchart of a camera control method according to Embodiment 5 of the present invention. As shown in FIG. 8, the method in this embodiment may include:
S501. UE sends a detection request message to an IMS, where the detection request message includes a detection instruction.
S502. The IMS receives the detection request message sent by the UE, and forwards the detection request message to a camera.
S503. The camera adds device information of the camera to a detection response message according to the detection instruction.
S504. The camera returns the detection response message to the IMS.
S505. The IMS receives the detection response message returned by the camera, and forwards the detection response message to the UE.
S506. The UE displays corresponding parameter information and function keys according to the device information of the camera included in the detection response message.

By using the camera control method provided by this embodiment, a detection request message is sent by using an IMS, to a camera that has established a connection with UE, to instruct the camera to return a detection response message carrying device information of the camera to the UE. In this way, parameter information and function keys corresponding to the device information of the camera are displayed on the UE; the problem in the prior art that UE can only monitor video content of a front-end camera by using an IMS and cannot intelligently recognize the front-end camera is solved; the device information of the camera is displayed intelligently.

Further, the camera control method provided by this embodiment further includes:
S507. The UE receives a control instruction that is generated when a user operates the function key.
S508. Send the generated control instruction to the IMS.
S509. The IMS receives the control instruction sent by the UE, and forwards the control instruction to the camera.
S510. The camera receives the control instruction forwarded by the IMS, and performs a corresponding operation according to the control instruction.

In this embodiment, the corresponding control instruction is generated according to the user's operation on the function key, and the UE sends the control instruction to the camera by using the IMS, so that the camera performs the corresponding operation as indicated by the instruction, implementing a function of the UE remotely controlling the camera that is connected over a network. In specific implementation, the user's control operation on the camera on a UE side is specifically an operation on a function key generated according to the device information of the camera. Therefore, operations that the user may select on the UE are adaptive to functions of the camera, and control operations performed on the camera become more intelligent.

In specific implementation, an item list is generally preset in the UE, and the detection instruction includes the item list. Correspondingly, step S503 is specifically that the camera sends the detection response message carrying the device information to the IMS according to the item list; step S506 is specifically that the UE maps the device information of the camera to the item list preset in the UE, and displays the parameter information and function keys corresponding to the device information.

In this embodiment, when the device information of the camera includes an item that is absent from the item list, before step S506, the method further includes: S511. The UE updates, according to the device information of the camera, the item list preset in the UE, so that for the device information of the camera, the UE displays the corresponding parameter information and generates the corresponding function keys.

Optionally, in the camera control method provided by this embodiment, when the device information is increased due to extension of functions of the camera, an update instruction may be forwarded to the UE by using the IMS to synchronously update the item list preset in the UE, so that an item set in the list is greater than or equal to items in the device information of the camera. It should be noted that the update performed by the UE on the item list in this embodiment may also be an update of the item list preset in the UE according to an update instruction sent by the user.

Still further, the device information of the camera in this embodiment may include user information, use information, and function information of the camera. Correspondingly, step S506 is specifically: Acquire the user information and use information of the camera from the detection response message, and display the parameter information of the camera on the UE; and acquire the supported function information of the camera from the detection response message, and generate the function keys corresponding to the function information on the UE.

In another implementation method of this embodiment, the method may further include: S512. The UE generates a corresponding on/off control instruction according to the user's on/off selection of the function key.

S513. Send the on/off control instruction to the IMS.

S514. The IMS receives the on/off control instruction sent by the UE, and forwards the on/off control instruction to the camera.

S515. The camera enables or disables a corresponding function according to the on/off selection instruction.

In this embodiment, the corresponding keys generated by the UE according to the function information may not only control operations on the front-end camera, but also implement, on the UE side, on/off control on corresponding device functions, so that the user chooses to disable functions that do not need to be used in the camera to reduce power consumption of the camera. It should be noted that, in this embodiment, there is no specific sequence between steps S507 and S512.

### Embodiment 6

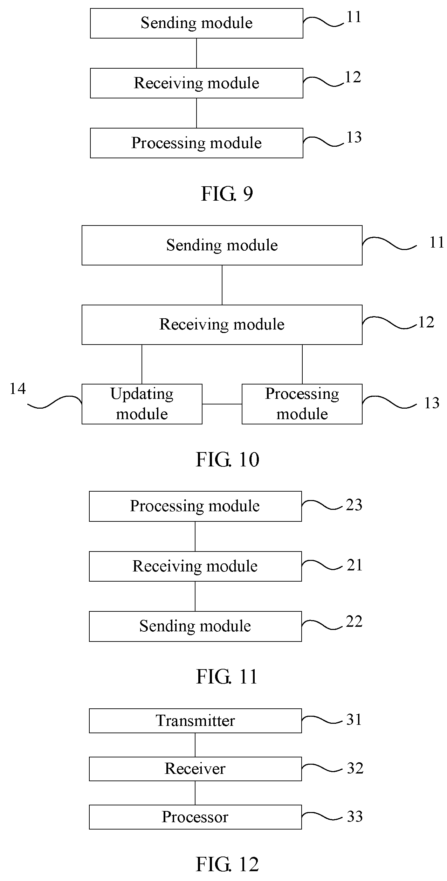

FIG. 9 is a schematic structural diagram of UE according to Embodiment 6 of the present invention. As shown in FIG. 9, the UE provided by this embodiment specifically includes a sending module 11, a receiving module 12, and a processing module 13.

The sending module 11 is configured to send a detection request message to an IMS, where the detection request message includes a detection instruction, where the detection instruction is used to instruct, after the IMS forwards the detection request message to a camera, the camera to send a detection response message carrying device information to the IMS according to the detection instruction, so that the IMS returns the detection response message to the user equipment UE.

The receiving module 12 is configured to receive the detection response message returned by the IMS.

The processing module 13 is configured to display corresponding parameter information and function keys according to the device information of the camera included in the detection response message received by the receiving module 12, so that a user controls the camera according to the function keys.

The UE provided by the embodiment of the present invention is used to execute the camera control method provided by Embodiment 1 of the present invention, and has corresponding functional modules. Implementation principles and technical effects thereof are similar, and are not described herein again.

Further, in the UE provided by this embodiment, the receiving module 12 is further configured to receive a control instruction that is generated when the user operates the function key; and correspondingly, the sending module 11 is further configured to send the control instruction to the IMS, so that the camera performs a corresponding operation after the camera receives the control instruction forwarded by the IMS.

It should be noted that the control instruction sent by the sending module in this embodiment is also sent in a form of a request message, and correspondingly, the camera may return a corresponding response message according to the request message.

Optionally, in this embodiment, if an item list is preset in the UE, the item list is included in the detection instruction, so as to instruct the camera to send the detection response message carrying the device information to the IMS according to the item list; and correspondingly, the processing module 13 is specifically configured to map the device information of the camera to the item list preset in the UE, and display the parameter information and function keys corresponding to the device information.

FIG. 10 is a schematic structural diagram of another UE according to the embodiment of the present invention. On a basis of FIG. 9, the UE provided by this embodiment further includes an updating module 14, configured to: if the device information of the camera includes an item that is absent from the item list, before the processing module 13 displays the corresponding parameter information and function keys according to the device information of the camera included in the detection response message received by the receiving module 12, update, according to the device information of the camera, the item list preset in the UE, so that for the device information of the camera, the UE displays the corresponding parameter information and generates the corresponding function keys.

Optionally, in this embodiment, the updating module 14 is further configured to update, according to an update instruction sent by the user, the item list preset in the UE, or when the device information is increased due to extension of functions of the camera, update, by using an update instruction forwarded by the IMS to the UE, the item list preset in the UE.

The UE provided by the embodiment of the present invention is used to execute the camera control method provided by Embodiment 2 of the present invention, and has corresponding functional modules. Implementation principles and technical effects thereof are similar, and are not described herein again.

Generally, the device information of the camera may include user information, use information, and function information of the camera. In specific implementation of this embodiment, the processing module 13 is specifically configured to: acquire the user information and use information of the camera from the detection response message, and display the parameter information of the camera on the UE; and acquire the supported function information of the camera from the detection response message, and generate the function keys corresponding to the function information on the UE. For example, the function information of the camera may include PTZ, automatic motion detection, and the like, and the function keys generated on the UE include keys for implementing the PTZ and the automatic motion detection.

Further, in the UE provided by this embodiment, the receiving module 12 is further configured to receive the user's on/off selection instruction of the function key; and the sending module 11 is further configured to send an on/off control instruction to the IMS according to the user's on/off selection instruction of the function key, so that the camera enables or disables a corresponding function after the camera receives the on/off control instruction forwarded by the IMS.

### Embodiment 7

FIG. 11 is a schematic structural diagram of a camera according to Embodiment 7 of the present invention. As shown in FIG. 11, the camera provided by this embodiment specifically includes a receiving module 21 and a sending module 22.

The receiving module 21 is configured to receive a detection request message that is sent by UE and forwarded by an IMS, where the detection request message includes a detection instruction.

The sending module 22 is configured to send a detection response message carrying device information of the camera to the IMS according to the detection instruction received by the receiving module 21, so that the IMS feeds back the detection response message to the UE, where the detection response message is used to enable the UE to display corresponding parameter information and function keys according to the device information.

The camera provided by the embodiment of the present invention is used to execute the camera control method provided by Embodiment 3 of the present invention, and has corresponding functional modules. Implementation principles and technical effects thereof are similar, and are not described herein again.

Further, in the camera provided by this embodiment, the receiving module 21 is further configured to receive a control instruction that is sent by the UE and forwarded by the IMS; and correspondingly, the camera further includes a processing module 23, configured to perform a corresponding operation according to an operation on the function key as indicated by the control instruction received by the receiving module 21.

In this embodiment, if an item list is preset in the UE, the item list is included in the detection instruction; and the sending module 22 is specifically configured to send the detection response message carrying the device information of the camera to the IMS according to the item list.

It should be noted that, if the device information of the camera includes an item that is absent from the item list, the detection response message is further used to enable the UE to update, according to the device information, the item list preset in the UE.

The camera provided by the embodiment of the present invention is used to execute the camera control method provided by Embodiment 4 of the present invention, and has corresponding functional modules. Implementation principles and technical effects thereof are similar, and are not described herein again.

Still further, in the camera provided by this embodiment, the sending module 22 is further configured to: when the device information is increased due to extension of functions of the camera, forward an update instruction to the UE by using the IMS, so that the UE updates the preset item list according to the update instruction.

In specific implementation, the device information of the camera may include user information, use information, and function information of the camera; the receiving module 21 is further configured to receive an on/off selection instruction that is sent by the UE and forwarded by the IMS; and correspondingly, the processing module 23 is further configured to enable or disable a corresponding function according to the on/off selection instruction received by the receiving module 21.

### Embodiment 8

FIG. 12 is a schematic structural diagram of UE according to Embodiment 8 of the present invention. As shown in FIG. 12, the UE provided by this embodiment specifically includes a transmitter 31, a receiver 32, and a processor 33.

The transmitter 31 is configured to send a detection request message to an IMS, where the detection request message includes a detection instruction, where the detection instruction is used to instruct, after the IMS forwards the detection request message to a camera, the camera to send a detection response message carrying device information to the IMS according to the detection instruction, so that the IMS returns the detection response message to the user equipment UE.

The receiver 32 is configured to receive the detection response message returned by the IMS.

The processor 33 is configured to display corresponding parameter information and function keys according to the device information of the camera included in the detection response message received by the receiver 32, so that a user controls the camera according to the function keys.

The UE provided by the embodiment of the present invention is used to execute the camera control method provided by Embodiment 1 of the present invention, and has corresponding physical apparatuses. Implementation principles and technical effects thereof are similar, and are not described herein again.

Further, in the UE provided by this embodiment, the receiver 32 is further configured to receive a control instruction that is generated when the user operates the function key; and correspondingly, the transmitter 31 is further configured to send the control instruction to the IMS, so that the camera performs a corresponding operation after the camera receives the control instruction forwarded by the IMS.

It should be noted that the control instruction sent by the transmitter 31 in this embodiment is also sent in a form of a request message, and correspondingly, the camera may return a corresponding response message according to the request message.

Optionally, in this embodiment, if an item list is preset in the UE, the item list is included in the detection instruction, so as to instruct the camera to send the detection response message carrying the device information to the IMS according to the item list; and correspondingly, the processor 33 is specifically configured to map the device information of the camera to the item list preset in the UE, and display the parameter information and function keys corresponding to the device information.

In this embodiment, if the device information of the camera includes an item that is absent from the item list, the processor 33 is further configured to: before displaying the corresponding parameter information and function keys according to the device information of the camera included in the detection response message received by the receiver 32, update, according to the device information of the camera, the item list preset in the UE, so that for the device information of the camera, the UE displays the corresponding parameter information and generates the corresponding function keys; and similarly, the processor 33 may be further configured to update, according to an update instruction sent by the user, the item list preset in the UE, or when the device information is increased due to extension of functions of the camera, update, by using an update instruction forwarded by the IMS to the UE, the item list preset in the UE.

The UE provided by the embodiment of the present invention is used to execute the camera control method provided by Embodiment 2 of the present invention, and has corresponding physical apparatuses. Implementation principles and technical effects thereof are similar, and are not described herein again.

Generally, the device information of the camera may include user information, use information, and function information of the camera. In specific implementation of this embodiment, the processor 33 is specifically configured to: acquire the user information and use information of the camera from the detection response message, and display the parameter information of the camera on the UE; and acquire the supported function information of the camera from the detection response message, and generate the function keys corresponding to the function information on the UE. For example, the function information of the camera may include PTZ, automatic motion detection, and the like, and the function keys generated on the UE include keys for implementing the PTZ and the automatic motion detection.

Still further, in the UE provided by this embodiment, the receiver 32 is further configured to receive the user's on/off selection operation on the function key; and correspondingly, the transmitter 31 is further configured to send an on/off control instruction to the IMS according to the user's on/off selection operation on the function key, so that the camera enables or disables a corresponding function after the camera receives the on/off control instruction forwarded by the IMS.

### Embodiment 9

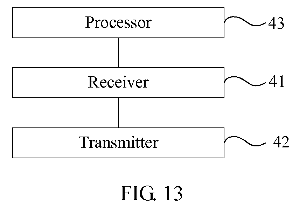

FIG. 13 is a schematic structural diagram of a camera according to Embodiment 9 of the present invention. As shown in FIG. 13, the camera provided by this embodiment specifically includes a receiver 41 and a transmitter 42.

The receiver 41 is configured to receive a detection request message that is sent by UE and forwarded by an IMS, where the detection request message includes a detection instruction.

The transmitter 42 is configured to send a detection response message carrying device information of the camera to the IMS according to the detection instruction received by the receiver 41, so that the IMS feeds back the detection response message to the UE, where the detection response message is used to enable the UE to display corresponding parameter information and function keys according to the device information.

The camera provided by the embodiment of the present invention is used to execute the camera control method provided by Embodiment 3 of the present invention, and has corresponding physical entities. Implementation principles and technical effects thereof are similar, and are not described herein again.

Further, in the camera provided by this embodiment, the receiver 41 is further configured to receive a control instruction that is sent by the UE and forwarded by the IMS; and correspondingly, the camera further includes a processor 43, configured to perform a corresponding operation according to an operation on the function key as indicated by the control instruction received by the receiver 41.

In this embodiment, if an item list is preset in the UE, the item list is included in the detection instruction; and the transmitter 42 is specifically configured to send the detection response message carrying the device information of the camera to the IMS according to the item list.

It should be noted that, if the device information of the camera includes an item that is absent from the item list, the detection response message is further used to enable the UE to update, according to the device information, the item list preset in the UE.

The camera provided by the embodiment of the present invention is used to execute the camera control method provided by Embodiment 4 of the present invention, and has corresponding physical entities. Implementation principles and technical effects thereof are similar, and are not described herein again.

Still further, in the camera provided by this embodiment, the transmitter 42 is further configured to: when the device information is increased due to extension of functions of the camera, forward an update instruction to the UE by using the IMS, so that the UE updates the preset item list according to the update instruction.

In specific implementation, the device information of the camera may include user information, use information, and function information of the camera; the receiver 41 is further configured to receive an on/off selection instruction that is sent by the UE and forwarded by the IMS; and correspondingly, the processor 43 is further configured to enable or disable a corresponding function according to the on/off selection instruction received by the receiver 41.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc CD, a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

It should be noted that the embodiments in this specification are all described in a progressive manner, for same or similar parts in the embodiments, reference may be made to these embodiments, and each embodiment focuses on a difference from other embodiments. Especially, an apparatus embodiment is basically similar to a method embodiment, and therefore is described briefly; for execution processes of specific functions of each unit, reference may be made to partial descriptions in the method embodiment. The described apparatus embodiment is merely exemplary. The units described as separate parts may or may not be physically separate, and parts displayed as units may or may not be physical units, may be located in one position, or may be distributed on a plurality of network units. Some or all of the modules may be selected according to actual requirements to achieve the objectives of the solutions of the embodiments. A person of ordinary skill in the art may understand and implement the embodiments of the present invention without creative efforts.

In summary, what is described above is merely exemplary embodiments of the technical solutions of the present invention, but is not intended to limit the protection scope of the present invention. Any modification, equivalent replacement, or improvement made without departing from the spirit and principle of the present invention shall fall within the protection scope of the present invention.

## Claims

1. A camera control method, comprising:
sending a detectiondetection request message to an IP multimedia subsystem IMS, wherein the detection request message comprises a detection instruction, wherein the detection instruction is used to instruct, after the IMS forwards the detection request message to a camera, the camera to send a detection response message carrying device information to the IMS according to the detection instruction, so that the IMS returns the detection response message to user equipment UE;
receiving the detection response message returned by the IMS; and
displaying corresponding parameter information and function keys according to the device information of the camera comprised in the detection response message, so that a user controls the camera according to the function keys.

2. The method according to claim 1, further comprising:
receiving a control instruction that is generated when the user operates the function key; and
sending the control instruction to the IMS, so that the camera performs a corresponding operation after the camera receives the control instruction forwarded by the IMS.

3. The method according to claim 1 or 2, wherein if an item list is preset in the UE, the item list is comprised in the detection instruction, so as to instruct the camera to send the detection response message carrying the device information to the IMS according to the item list; and
the displaying corresponding parameter information and function keys according to the device information of the camera comprised in the detection response message comprises:
mapping the device information of the camera to the item list preset in the UE, and displaying the parameter information and function keys corresponding to the device information.

4. The method according to claim 3, wherein if the device information of the camera comprises an item that is absent from the item list, before the displaying corresponding parameter information and function keys according to the device information of the camera comprised in the detection response message, the method further comprises:
updating, according to the device information of the camera, the item list preset in the UE, so that for the device information of the camera, the UE displays the corresponding parameter information and generates the corresponding function keys.

5. The method according to any one of claims 1 to 4, further comprising:
updating, according to an update instruction sent by the user, the item list preset in the UE; or
when the device information is increased due to extension of functions of the camera, updating, by using an update instruction forwarded by the IMS to the UE, the item list preset in the UE.

6. The method according to any one of claims 1 to 5, wherein the device information comprises user information, use information, and function information of the camera; and the displaying corresponding parameter information and function keys according to the device information of the camera comprised in the detection response message comprises:
acquiring the user information and use information of the camera from the detection response message, and displaying the parameter information of the camera on the UE; and
acquiring the supported function information of the camera from the detection response message, and generating the function keys corresponding to the function information on the UE.

7. The method according to claim 6, further comprising:
sending an on/off control instruction to the IMS according to the user's on/off selection of the function key, so that the camera enables or disables a corresponding function after the camera receives the on/off control instruction forwarded by the IMS.

8. The method according to claim 6 or 7, wherein the function information comprises pan-tilt-zoom PTZ and automatic motion detection, and the function keys generated on the UE comprise keys of the PTZ and the automatic motion detection.

9. A camera control method, comprising:
receiving a detection request message that is sent by user equipment UE and forwarded by an IP multimedia subsystem IMS, wherein the detection request message comprises a detection instruction; and
sending a detection response message carrying device information of a camera to the IMS according to the detection instruction, so that the IMS feeds back the detection response message to the UE, wherein the detection response message is used to enable the UE to display corresponding parameter information and function keys according to the device information.

10. The method according to claim 9, further comprising:
receiving a control instruction that is sent by the UE and forwarded by the IMS; and
performing a corresponding operation according to an operation on the function key as indicated by the control instruction.

11. The method according to claim 9 or 10, wherein if an item list is preset in the UE, the item list is comprised in the detection instruction; and the sending a detection response message carrying device information of a camera to the IMS according to the detection instruction comprises:
sending the detection response message carrying the device information of the camera to the IMS according to the item list.

12. The method according to claim 11, wherein if the device information of the camera comprises an item that is absent from the item list, the detection response message is further used to enable the UE to update, according to the device information, the item list preset in the UE.

13. The method according to any one of claims 9 to 12, further comprising:
when the device information is increased due to extension of functions of the camera, forwarding an update instruction to the UE by using the IMS, so that the UE updates the preset item list according to the update instruction.

14. The method according to any one of claims 9 to 13, wherein the device information comprises user information, use information, and function information of the camera; and the method further comprises:
receiving an on/off selection instruction that is sent by the UE and forwarded by the IMS; and
enabling or disabling a corresponding function according to the on/off selection instruction.

15. User equipment, comprising:
a sending module, configured to send a detection request message to an IP multimedia subsystem IMS, wherein the detection request message comprises a detection instruction, wherein the detection instruction is used to instruct, after the IMS forwards the detection request message to a camera, the camera to send a detection response message carrying device information to the IMS according to the detection instruction, so that the IMS returns the detection response message to the user equipment UE;
a receiving module, configured to receive the detection response message returned by the IMS; and
a processing module, configured to display corresponding parameter information and function keys according to the device information of the camera comprised in the detection response message received by the receiving module, so that a user controls the camera according to the function keys.

16. The user equipment according to claim 15, further comprising:
the receiving module is further configured to receive a control instruction that is generated when the user operates the function key; and
the sending module is further configured to send the control instruction to the IMS, so that the camera performs a corresponding operation after the camera receives the control instruction forwarded by the IMS.

17. The user equipment according to claim 15 or 16, wherein if an item list is preset in the UE, the item list is comprised in the detection instruction, so as to instruct the camera to send the detection response message carrying the device information to the IMS according to the item list; and
the processing module is specifically configured to map the device information of the camera to the item list preset in the UE, and display the parameter information and function keys corresponding to the device information.

18. The user equipment according to claim 17, further comprising:
an updating module, configured to: if the device information of the camera comprises an item that is absent from the item list, before the processing module displays the corresponding parameter information and function keys according to the device information of the camera comprised in the detection response message received by the receiving module, update, according to the device information of the camera, the item list preset in the UE, so that for the device information of the camera, the UE displays the corresponding parameter information and generates the corresponding function keys, wherein
the updating module is further configured to update, according to an update instruction sent by the user, the item list preset in the UE, or when the device information is increased due to extension of functions of the camera, update, by using an update instruction forwarded by the IMS to the UE, the item list preset in the UE.

19. The user equipment according to any one of claims 15 to 18, wherein the device information comprises user information, use information, and function information of the camera; and the processing module is specifically configured to:
acquire the user information and use information of the camera from the detection response message, and display the parameter information of the camera on the UE; and acquire the supported function information of the camera from the detection response message, and generate the function keys corresponding to the function information on the UE.

20. The user equipment according to claim 19, wherein the receiving module is further configured to receive the user's on/off selection operation on the function key; and
the sending module is further configured to send an on/off control instruction to the IMS according to the user's on/off selection operation on the function key, so that the camera enables or disables a corresponding function after the camera receives the on/off control instruction forwarded by the IMS.

21. A camera, comprising:
a receiving module, configured to receive a detection request message that is sent by user equipment UE and forwarded by an IP multimedia subsystem IMS, wherein the detection request message comprises a detection instruction; and
a sending module, configured to send a detection response message carrying device information of the camera to the IMS according to the detection instruction received by the receiving module, so that the IMS feeds back the detection response message to the UE, wherein the detection response message is used to enable the UE to display corresponding parameter information and function keys according to the device information.

22. The camera according to claim 21, wherein the receiving module is further configured to receive a control instruction that is sent by the UE and forwarded by the IMS; and
a processing module is configured to perform a corresponding operation according to an operation on the function key as indicated by the control instruction received by the receiving module.

23. The camera according to claim 21 or 22, wherein if an item list is preset in the UE, the item list is comprised in the detection instruction; and the sending module is specifically configured to send the detection response message carrying the device information of the camera to the IMS according to the item list.

24. The camera according to any one of claims 21 to 23, wherein the sending module is further configured to: when the device information is increased due to extension of functions of the camera, forward an update instruction to the UE by using the IMS, so that the UE updates the preset item list according to the update instruction.

25. The camera according to any one of claims 21 to 24, wherein the device information comprises user information, use information, and function information of the camera; the receiving module is further configured to receive an on/off selection instruction that is sent by the UE and forwarded by the IMS; and
the processing module is further configured to enable or disable a corresponding function according to the on/off selection instruction received by the receiving module.
